# EUROPEAN PATENT APPLICATION

(11) **EP 2 113 841 A1**
(43) Date of publication of application: **04.11.2009**
(21) Application number: 09158975.4
(22) Date of filing: 28.04.2009
(51) Int. Cl.: G06F 9/45, G06F 9/50

(54) **Allocating resources in a multicore environment**

(30) Priority: 29.04.2008 GB 0807827
(71) Applicant: Picoship Designs Limited, 108 Walcot Street Bath BA1 5BG (GB)
(72) Inventor: Towner, Daniel, Bath, BA2 7UP (GB)
(74) Representative: O'Connell, David Christopher

(57) **Abstract**

In a multicore programming environment comprising a plurality of processors in a plurality of categories, and having predetermined communication resources of different types for interconnecting the processors, resources are allocated by: receiving a plurality of software processes, each process having a connection requirement; receiving an allocation scheme, in which each of the software processes is allocated to a respective processor of said plurality of processors; determining a plurality of communication requirements based on the connection requirements and the processors to which each process is allocated; and for each of the communication requirements: determining the respective processors to which the associated processes have been assigned; and allocating a communications resource of a type that is suitable based on said categories of said respective processors, such that the total allocated communications resource does not exceed the predetermined communication resources.

## Description

This invention relates to the allocation of resources in a multicore environment.

It is becoming common to provide processor systems that include multiple processors, either in the form of multiple virtual processors in a single physical processor, or in the form of multiple physical processors, which may be provided on a single chip or on multiple chips, and which may be of the same type or may be of different types.

Where processors of different types are provided, the software processes running on these processors need to be programmed in the appropriate languages, introducing difficulties in ensuring that the software processes can communicate with each other as required.

According to an aspect of the present invention, there is provided a method of distributing resources in a multicore programming environment comprising a plurality of processors in a plurality of categories, and having predetermined communication resources of different types for interconnecting the processors, the method comprising:
receiving a plurality of software processes, each process having a connection requirement;
receiving an allocation scheme, in which each of the software processes is allocated to a respective processor of said plurality of processors;
determining a plurality of communication requirements based on the connection requirements and the processors to which each process is allocated; and
for each of the communication requirements:
   determining the respective processors to which the associated processes have been assigned; and
      allocating a communications resource of a type that is suitable based on said categories of said respective processors, such that the total allocated communications resource does not exceed the predetermined communication resources.

According to a second aspect of the present invention, there is provided a multicore processor system, comprising a plurality of processors in a plurality of categories, and having predetermined communication resources of different types for interconnecting the processors, and being provided with computer-readable code for performing a method of distributing resources in said system, the method comprising:
receiving a plurality of software processes, each process having a connection requirement;
receiving an allocation scheme, in which each of the software processes is allocated to a respective processor of said plurality of processors;
determining a plurality of communication requirements based on the connection requirements and the processors to which each process is allocated; and
for each of the communication requirements:
   determining the respective processors to which the associated processes have been assigned; and
      allocating a communications resource of a type that is suitable based on said categories of said respective processors, such that the total allocated communications resource does not exceed the predetermined communication resources.

This has the advantage that the required processes can be allocated to appropriate processors, and the programmer can be sure that the required communications between processes can be scheduled.

For a better understanding of the invention, and to show how it can be put into effect, reference will now be made, by way of example, to the accompanying drawings, in which:-
Figure 1 is a block schematic diagram, illustrating a multicore processor environment for use in the present invention; and
Figure 2 is a flow chart, illustrating a method in accordance with the invention.

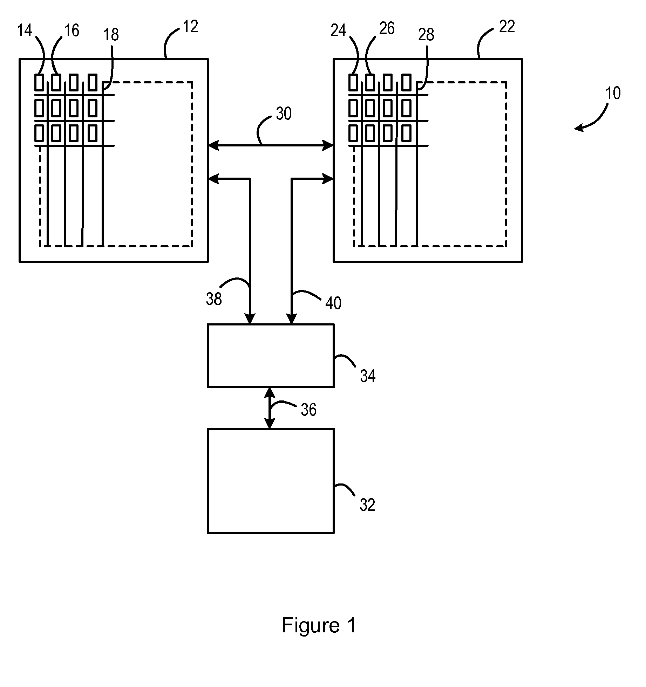

Figure 1 schematically illustrates one example of a multicore processor system 10. In this example, there is a first processor array 12, for example in the form of a picoArray® processor from picoChip Designs Limited, having a plurality of processor elements 14, 16, ... arranged in an array, and interconnected by a bus 18 that, within reason, allows any one of the processor elements to be connected to any other one of the processor elements. There is also a second processor array 22, again for example in the form of a picoArray® processor from picoChip Designs Limited, having a plurality of processor elements 24, 26, ... arranged in an array, and interconnected by a bus 28.

More details about suitable processor arrays 12, 22 are available for example in WO02/50624.

The two processor arrays 12, 22 are interconnected by an interface 30, which is specifically provided for communication between multiple processor arrays.

In this example, there is also provided a further processor 32 of a different type. For example, the processor 32 may be one of the commonly available ARM® family of processors. In some situations, it may be useful to be able to use the single physical processor 32 to implement a plurality of virtual processors. In that case, these virtual processors can communicate via a shared memory device 34 over an interface 36.

The processor arrays 12, 22 can preferably also communicate with the shared memory device 34 over respective interfaces 38, 40.

As shown here, the further processor 32 is physically separate from the two processor arrays 12, 22. However, it will be appreciated that there also exist devices, such as the picoArray® 20x series processors from picoChip Designs Limited, including both a processor array and an ARM® processor.

There is thus illustrated one system in which the method can be used, comprising a plurality of processors. A processor may be physical (e.g., an ARM@ 926EJ processor, or a MEM array element in a picoArray® array processor), or virtual (e.g., where an operating system allows several processes to share a physical processor, and each process is said to be executing on a virtual processor). Physical processors do not necessarily need a full operating system in order to provide virtual processors. Simple round-robin scheduling systems may be sufficient to give the illusion of multiple
virtual processors, even on a lightweight processor. A 'system' provides a fixed collection of processors, containing at least one physical processor.

The system also provides a means for processors, physical or virtual, to exchange information. For example, picoArray® processors may communicate via the bus on the picoArray® chip, while virtual processors may use shared memory as described above. The communication system must be capable of deterministic performance, and the communication mechanism must be under the control of the processor system. Thus, for example, communication over an internet would not satisfy this criterion, as it would not provide the required performance guarantees, and is subject to external forces.

It will be apparent that, in order to be able to make full use of the system 10, a programmer needs to be able to write software that defines the different parts of an overall software process, and that the software defining these different parts needs to be executed on appropriate processors, with the processors being able to communicate with each other as required, so that the different parts of the overall program can operate correctly together.

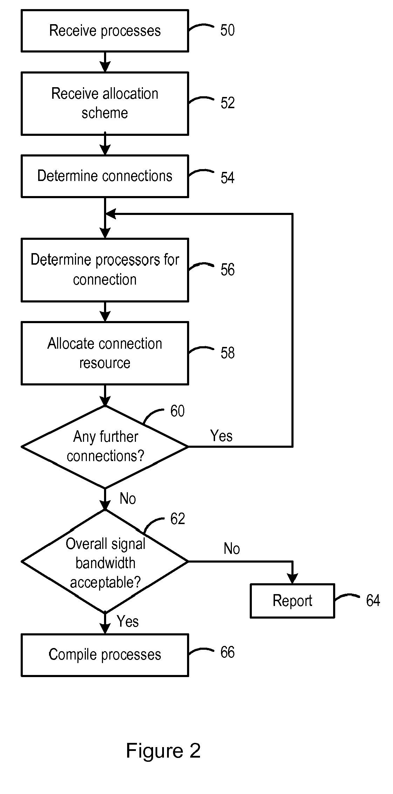

Figure 2 is a flow chart, illustrating an example of the method according to the invention. In this example, the method is performed by a software process, running on a processor system that is separate from the processor system 10. The software for performing this method may conveniently be provided together with the processor system 10.

In step 50, the method receives the software processes that make up the overall program. A 'software process' is a defined to be a sequential list of executing instructions. The programmer thus provides a set of source files which describe the composition of the system.

Individual software processes are written in a suitable programming language (e.g., picoChip® software uses ANSI/ISO C programming language, and picoArray® assembly language). The use of a high-level language allows the source code to be abstracted from the processor upon which it will execute (e.g., in a heterogeneous system, a process may be executed on a range of processor types by recompiling the high-level language into the appropriate machine code). The language must support the same semantics across all platforms (e.g., it should be possible to create data types of known sizes across all processor targets), otherwise moving a process from one processor type to another may incur side-effects.

Within the system, the processors can be grouped into placement classes. For example, in the system 10 illustrated in Figure 1, the placement classes might distinguish between the processor elements on the processor arrays 12, 22 on the one hand, and the processor 32 on the other hand. In addition, the processor elements on the processor arrays 12, 22 might differ from each other. For example, in a picoArray® device, the processor elements include elements referred to as standard (STAN), memory (MEM), and control (CTRL). A class may be a sub-class of another class. For example, the MEM processor elements have a subset of the functionality of the CTRL processor elements, and so the CTRL placement class is a sub-class of the MEM placement class, meaning that any process that can be placed on a MEM processor can also be placed on a CTRL processor, but not vice versa. There is also a placement class ANY, meaning that the process can be placed on any of the processors.

Where, as in this illustrated embodiment, there are two processor arrays 12, 22, the programmer may specify that particular processes are to be allocated to processor elements on the same array processor, or such decisions may be made by software.

Each of the software processes received in step 50 is therefore tagged by the programmer with the class to which the programmer wishes it to belong. For example, a process tagged with the class MEM will be executed on a MEM or a CTRL processor, but not on a STAN or ARM processor. The programmer defines the class to which each process belongs in order to partition the processes amongst the available resources. When tagging a process, the largest possible placement class should be used, to give as much freedom as possible when allocating resources. For example, by tagging a process as ANY, it may be allocated to any available processor, whereas tagging a process with a smaller class may unnecessarily restrict the processors to which it may be allocated.

Each process also defines the type of communication in which it needs to participate, for example in terms of the type of data being transferred and the bandwidth and latency of the communication.

In step 52, the allocation scheme is received, that is, the way in which the software processes received in step 50 are allocated to the available processors. In one embodiment of the invention, this allocation scheme may be determined entirely by the programmer, in which case it is not necessary for the programmer to define the classes to which the processes belong, as described above. However, in other embodiments, the allocation scheme is determined at least partly by software. The details of this determination are not relevant to an understanding of the present invention, which deals with the consequences of the allocation scheme.

In step 54, the required connections between the software processes, and hence between the processors to which those processes have been allocated, are determined.

A software process may communicate with other software processes using 'signals'. A signal allows data to be sent from one process, to one or more other processes. The software processes communicate over signals using a set of communication primitives, allowing data to be sent over a signal, or received from a signal. These communications primitives may be implemented as a library of functions, as compiler builtins (aka intrinsics), or as language extensions. For example, communications in C code may be implemented using a library of functions, while in assembly language special instructions are used.

Thus, signals connect processes together. Signals are strongly typed (i.e., the types of data values that are to be transmitted are well-defined). Data sent over the signal is guaranteed to arrive. Signals have guaranteed bandwidths. For example, within a picoArray® array processor, signals define the bandwidth using @-rates, where @4 would mean that every 4th communications slot is allocated to the signal.

In addition, signals may be assigned latencies, specifying the maximum permitted time to transmit data from the sender to the receiver. The latency can be explicit, or can be implicit. For example, in the case of elements on the same device, such as one of the two processor arrays 12, 22 in the illustrated system, the physical implementation of the bus 18 imposes a maximum latency of around 7 cycles. In the absence of any explicit latency requirement, this implicit hardware latency can be assumed.

If processes which communicate over a signal do not utilise the full bandwidth of the signal, then that bandwidth is wasted. For example, on a picoArray® device, the bus is time-division multiplexed. If a processor decides not to use its allocated communication slots, those slots are wasted, and cannot be used by other processors. If a process attempts to send more data over a signal than the allocated bandwidth permits, then the process will be stalled until sufficient bandwidth is available. For example, on a picoArray® processor, if the signal is specified as @16 (i.e., every 16th slot is allocated to the signal), and a process attempts to send 4 data items over the signal, then the process may send the first item, but will then send the remaining items at 16 cycle intervals, leading to the process stalling, or slowing down.

Thus, in step 54, signals are created, and used to connect the processes. As will be apparent from the discussion above, signals must be suitably specified, to give information about bandwidths and latencies. A structural language allows signals and processes to be created, and connected together. For example, picoChip® uses structural VHDL to define signals and process connections.

In addition, in step 56, a signal connection in the source system is examined, and classified according to the mechanism by which the signal will be implemented. Different implementations are required for each type of signal connection, with the exact type of implementation varying, depending upon the types of processors and their physical connections.

For example, in the case of the illustrative system shown in Figure 1, there may be communications from a processor array to another processor array on one device. Such communication between processes uses the on-chip bus. There may also be communications from a processor array to a processor array across devices. Such communication occurs using the respective buses within the two devices, and the interface 30 for inter-chip communication. There may also be communications between virtual processes running on the processor 32. One such process may communicate with another by using traditional inter-process communication mechanisms, such as shared memory 34 guarded by mutexes and semaphores, sockets, pipes, message queues, and so on. There may also be communications from a processor array to a virtual processor on the processor 32. One way of achieving this is for the processor array to use the on-chip bus and the respective interface 38, 40 to communicate with the block of shared memory 34. Data is sent to the shared memory 34, where it becomes visible to the processor 32. A special process on the processor 32 is responsible for picking up the data from the shared memory 34, and passing it to the appropriate virtual processor.

There are many other ways of achieving communication between the different processes in a system. For example, where the processor 32 and one or more processor array 12, 22 is provided on a single device, there may be special instructions in the on-chip host processor to support communication (e.g., direct access from the processor 32 to the bus 18, 28 on the processor array 12, 22.

In step 58, appropriate connection resources are allocated for each connection. When the implementation of each signal connection is being decided, the following points are considered. Firstly, the signal connection must meet the performance requirements of the signal. For example, if an excessive bandwidth is requested for a signal, this is highly likely to be rejected. Secondly, point-to-multipoint signals must be allocated to suitable mechanisms. For example, communications over the buses 18, 28, or with shared memory 34 would support point-to-multipoint signals, while Pipes would not. Thirdly, data format differences between signal ends must be considered. For example, if a PowerPC® chip communicates with a picoArray® device, then the processors at each end of the signal use different endianness modes. Some signal implementations may include endianness conversion automatically. However, when no such conversion is provided, one of the ends of the signal must implement the conversion. For example, a point-to-multipoint signal might require the sender to perform the conversion, so that the conversion happens once, rather than requiring multiple receivers each to perform independent conversions.

In step 60, when a communications resource has been allocated for one connection, it is tested whether there are any more connections for which resources need to be allocated. If so, steps 56 and 58 are repeated until all connections have been considered.

Once each signal has been considered in isolation, the process passes to step 62, in which the whole system operation of signals must be considered. For example, although individual signals may require little bandwidth in isolation, once all such signals in the system have been considered, the required bandwidth could be too much for the system. In such a case, the process passes to step 64, in which the problem is reported to the user, who may be able to revisit the signal specifications in order to reduce the bandwidth requirements.

For example, in step 62, it can be checked that the signals routed within an array processor device do not exceed the available bandwidth on the respective bus. Similarly, signal bandwidth between virtual processors running on the processor 32 can be checked by summing the bandwidths of all inter-processor communications, and ensuring that the total does not exceed the available bandwidth.

The process then passes to step 66, in which each process is now compiled into suitable code for the processor class on which it will run. The most basic requirement here is for the code to be compiled with a suitable compiler (e.g., where the processor 32 is an ARM@ processor, processes running on this processor must be compiled using an ARM compiler, and where the processor arrays 12, 22 are picoArray® devices, processes running on these must be compiled using the picoChip® compiler).

There are other considerations during this phase. For example, the language's communications primitives (e.g. built-ins, functions, language extensions) must be converted into the appropriate code for communicating over the signal's chosen implementation. For example, ISO C code for a process running on a picoArray® requires a set of communications functions. These functions are implemented using calls to the PUT/GET instructions provided on picoArray® processors. On an ARM@ processor, the communication functions may call operating system IPC mechanisms, such as shared memory mutexes.

If a signal requires data to be transferred from one endianness domain to another (e.g., PowerPC® to picoArray® MEM processor element), and the signal implementation is not directly capable of performing the endianness conversion, the implementation of the signal communication must perform the conversion itself.

Once all the processes have been compiled, and all signal implementations decided, it remains only to generate any special purpose code for supporting the system (e.g., start-up code on the processor 32, to initialise the processes running on it), and to generate the system code in a form suitable for loading onto the hardware system. It will also be noted that the processor system 10 can exist as a software simulation, and the allocation of communication resources can still be performed in the same way, in order to check the performance of the processor system.

There is thus provided a system which allows the programmer to program each process in a consistent manner, and then allows these processes to be allocated to suitable processors, in a way that allows the communications between processors to be handled in a deterministic manner.

## Claims

1. A method of distributing resources in a multicore programming environment comprising a plurality of processors in a plurality of categories, and having predetermined communication resources of different types for interconnecting the processors, the method comprising:
receiving a plurality of software processes, each process having a connection requirement;
receiving an allocation scheme, in which each of the software processes is allocated to a respective processor of said plurality of processors;
determining a plurality of communication requirements based on the connection requirements and the processors to which each process is allocated; and
for each of the communication requirements:
determining the respective processors to which the associated processes have been assigned; and
allocating a communications resource of a type that is suitable based on said categories of said respective processors, such that the total allocated communications resource does not exceed the predetermined communication resources.

2. A method as claimed in claim 1, wherein the plurality of processors comprise a plurality of physical processors.

3. A method as claimed in claim 2, wherein the plurality of physical processors comprise a plurality of processors in a processor array.

4. A method as claimed in claim 3, wherein the plurality of physical processors further comprise a physical processor in a different category outside the processor array.

5. A method as claimed in claim 1, wherein the plurality of processors comprise a plurality of virtual processors.

6. A multicore processor system, comprising a plurality of processors in a plurality of categories, and having predetermined communication resources of different types for interconnecting the processors, and being provided with computer-readable code for performing a method of distributing resources in said system, the method comprising:
receiving a plurality of software processes, each process having a connection requirement;
receiving an allocation scheme, in which each of the software processes is allocated to a respective processor of said plurality of processors;
determining a plurality of communication requirements based on the connection requirements and the processors to which each process is allocated; and
for each of the communication requirements:
determining the respective processors to which the associated processes have been assigned; and
allocating a communications resource of a type that is suitable based on said categories of said respective processors, such that the total allocated communications resource does not exceed the predetermined communication resources.
